Europäisches Patentamt

European Patent Office

Office européen des brevets

(11) Veröffentlichungsnummer: **0 047 808**

**A1**

(12) # EUROPÄISCHE PATENTANMELDUNG

(21) Anmeldenummer: 80710022.7

(22) Anmeldetag: 13.09.80

(51) Int. Cl.³: **B 60 R 1/02**

(43) Veröffentlichungstag der Anmeldung:
24.03.82 Patentblatt 82/12

(84) Benannte Vertragsstaaten:
AT BE CH DE FR GB IT LI LU NL SE

(71) Anmelder: Metallwerk FRESE GmbH
Moltkestrasse 25
D-5653 Leichlingen(DE)

(72) Erfinder: Otting, Horst
Moltkestrasse 34
D-5653 Leichlingen 1(DE)

(74) Vertreter: Gille, Christian, Dipl.-Ing. et al,
Redies , Redies, Türk & Gille Bruckner Strasse 20
D-4000 Düsseldorf 13(DE)

(54) Rückblickspiegel für Kraftfahrzeuge.

(57) Rückblickspiegel für Kraftfahrzeuge, insbesondere Außenrückblickspiegel, der aus einem schalenartigen Gehäuse (3) und einer Spiegelscheibe (1) besteht, die mittels einer auf den umlaufenden äußeren Rand (11) des Gehäuses aufgesteckten umlaufenden Fassung gehalten ist, welche an in das Gehäuse 3 ragenden Stegen (7) nach innen weisende federnde Nasen (9) zum Hintergreifen der sich gegen die Unterseite (6) der Fassungen (2) legenden Spiegelscheibe (1) und an die Nase (9) anschließend eine federnde Zunge (13), die sich gegen die Innenseite des Gehäuses (3) legt und die Nase (9) flach gegen die Rückseite der Spiegelscheibe (9) drückt, aufweist, so daß Spiegelscheiben (1) unterschiedlicher Dicke und/oder Außenabmessungen gleich fest und vibrationssicher am Gehäuse (3) montiert werden können.

FIG.4

EP 0 047 808 A1

0047808

G 52 404

## Rückblickspiegel für Kraftfahrzeuge

Die Erfindung betrifft einen Rückblickspiegel für Kraftfahrzeuge und insbesondere einen Außenrückblickspiegel, der aus einem schalenartigen Gehäuse und einer Spiegelscheibe besteht, die mittels einer auf den äußeren Rand des Gehäuses aufgesteckten umlaufenden Fassung im Gehäuse gehalten ist, welche an in das Gehäuse ragenden Stegen nach innen weisende federnde Nasen zum Hintergreifen der sich gegen die Unterseite der Fassung legenden Spiegelscheibe aufweist.

Bei einem bekannten Rückblickspiegel dieser Art (DE-GM 74 32 120) besteht das Problem, daß die Spiegelscheibe nur dann fest und vibrationsfrei am Gehäuse gehalten wird, wenn Gehäuserand, Fassung und Spiegelscheibe innerhalb sehr enger Toleranzen liegende, aufeinander abgestimmte Abmessungen aufweisen. Dadurch werden die Herstellungskosten des Rückblickspiegels deutlich beeinflußt. Dies ist aber insbesondere im Hinblick darauf nachteilhaft, daß es sich bei Rückblickspiegeln für Kraftfahrzeuge um Massenprodukte handelt, bei denen schon kleinere Kostenerhöhungen großen Einfluß auf die Gesamtkalkulation haben und bei denen mit sehr engen Verdienstspannen gearbeitet wird.

Die Aufgabe der Erfindung besteht darin, einen Weg zu weisen, wie Rückblickspiegel der eingangs genannten Gattung preiswerter als bisher hergestellt werden können, ohne die Befestigung der Spiegelscheibe am Gehäuse zu beeinträchtigen.

Diese Aufgabe wird erfindungsgemäß dadurch gelöst, daß jeder der in das Gehäuse ragenden Stege der Fassung des Rückblickspiegels an die die Spiegelscheibe hintergreifende Nase anschließend eine federnde Zunge aufweist, die sich bei der Montage der Fassung und der Spiegelscheibe am Gehäuse gegen die Innenseite des Gehäuses legt und dadurch die Nase gegen die Rückseite der Spiegelscheibe drückt. Daher kann jede Nase eine mit der Spiegelscheibe zusammenwirkende abgeschrägte Oberseite aufweisen, die beim Einstecken der Fassung in das Gehäuse wenigstens teilweise gegen die Rückseite der Spiegelscheibe gedrückt wird und in diesem Bereich dann parallel zur Spiegelscheibe liegt. Somit wird die Spiegelscheibe von den einzelnen Nasen stets flächig gegen die Unterseite der Fassung gedrückt, gleichgültig wie groß die Dicke und die Umfangsabmessungen der Spiegelscheibe im einzelnen Falle sind. Dementsprechend brauchen die Abmessungen des Gehäuses, der Fassung und der Spiegelscheibe keine allzu engen Toleranzen aufzuweisen, um einen vibrationsfreien festen Sitz der Spiegelscheibe im Gehäuse zu gewährleisten. Bei vorbekannten Rückblickspiegeln dieser Art bestand insbesondere dann die Gefahr eines zu lockeren Sitzes der Spiegelscheibe, wenn deren Dicke innerhalb der üblichen Toleranzen vom vorgegebenen Istmaß abweicht.

Gemäß einer bevorzugten praktischen Ausführungsform der Erfindung ist die mit dem Gehäuse in Kontakt kommende und die betreffende Nase gegen die Rückseite der Spiegelscheibe drückende Zunge als Verlängerung des betreffenden Steges ausgebildet. Dadurch läßt sich die erfindungsgemäß ausgestaltete Fassung praktisch ohne zusätzliche Kosten herstellen, obwohl ihre Funktion wesentlich verbessert ist.

Nach noch einem weiteren Merkmal der Erfindung enthält die Fassung zwischen benachbarten Stegen querverlaufende Entlüftungsrillen. Dadurch wird die Montage vereinfacht und ferner im Betrieb eine bessere Entlüftung als bisher gewährleistet, so daß im Gehäuse kein Feuchtigkeitsstau entstehen kann, der schädliche Einflüsse auf die Beschichtung des Spiegelglases und auf die Witterungsbeständigkeit des Gehäuses, wenn es aus Metall besteht, haben kann.

In der Zeichnung ist ein Ausführungsbeispiel des erfindungsgemäßen Rückblickspiegels für Kraftfahrzeuge dargestellt, und zwar zeigt

Fig. 1    eine Ansicht der Unterseite die das Spiegelscheibe im Gehäuse haltenden Fassung,

Fig. 2    einen im Maßstab vergrößterten Querschnitt durch die Fassung nach Linie II-II aus Fig. 1 mit Spiegelscheibe vor der Montage am Gehäuse des Rückblickspiegels,

Fig. 3    einen Querschnitt der Fassung, der Spiegelscheibe und des Gehäuses nach der Montage,

Fig. 4    einen Querschnitt wie in Fig. 3, wobei die Spiegelscheibe jedoch eine Überdicke aufweist,

Fig. 5    einen ähnlichen Querschnitt wie in Fig. 3 und 4 nach Linie V-V aus Fig. 1 durch die in das Gehäuse des Rückblickspiegels eingesetzte Fassung im Bereich der die Fassung am Gehäuse verankernden Stege und

EPA- u. PCT-SATZSPIEGEL-PAPIER
HERMANN ARZT GMBH, MÜNCHEN, TEL. (089) 4480431

Fig. 6 einen weiteren Querschnitt der Fassung nach
Linie VI-VI aus Fig. 1.

Eine Spiegelscheibe 1 wird mittels einer Fassung 2 im
Gehäuse 3 eines nicht näher dargestellten Rückblickspiegels für Kraftfahrzeuge gehalten.

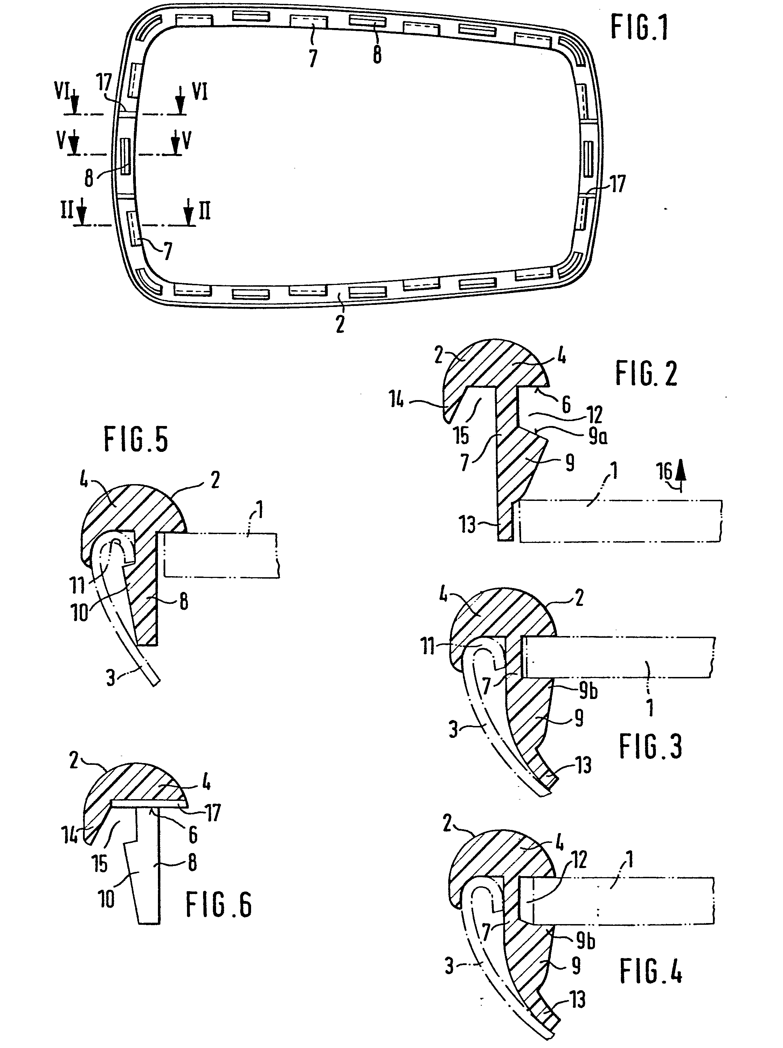

Die aus verhältnismäßig steifem, jedoch elastischem
Material wie Kunststoff hergestellte Fassung 2 besteht im wesentlichen aus einem hochstehenden gewölbten
umlaufenden Wulst 4, dessen Grundriß der Form der
Öffnung des Gehäuses 3 angepaßt ist und somit auch die
Form der Spiegelscheibe 1 bestimmt. Ein derartiger
Grundriß ist in Fig. 1 zu erkennen. Der Querschnitt
des Wulstes 4 ist aus den Fig. 2 bis 6 zu ersehen.

Die nach außen weisende Oberseite des Wulstes 4 ist,
wie die Fig. 2 bis 6 erkennen lassen, gewölbt. An der
im wesentlichen flach ausgebildeten Unterseite 6 des
Wulstes 4 sind abwechselnd zwei Arten von Stegen 7 und
8 vorgesehen, die in das Gehäuse 3 hineinragen, wenn
die Fassung 2 auf den umlaufenden Rand des Gehäuses 3
aufgesteckt ist. Die Stege 7 sind jeweils mit einer
nach innen weisenden Nase 9, welche nach der Montage
die Spiegelscheibe 1 hintergreift, und die Stege 8
mit einer nach außen weisenden Nase 10, welche sich
unter den nach innen gebogenen Rand 11 des Gehäuses 3
legt, versehen. Dementsprechend halten die Stege 7 die
Spiegelscheibe 1 in der Fassung 2, während die Stege 8
mit ihren Nasen 10 die Fassung 2 im Gehäuse 3 sozusagen mit Schnappsitz halten.

Die Nasen 9 sind mit einer abgeschrägten Oberseite 9a
versehen, so daß die Fassung 2 eine im Querschnitt
keilstumpfförmige Aufnahme 12 zum Einstecken der Spiegelscheibe 1 enthält. Unterhalb der Nase 9 ist jeder Steg
7 mit einer Verlängerung in Form einer Zunge 12 ver-

sehen, die sich gegen die Innenseite des Gehäuses 3 legt, wenn die Fassung 2 auf das Gehäuse aufgesteckt ist (vergl. Fig 3 und 4). Dadurch werden die Zungen 13 nach innen umgelegt und drücken den unter der Spiegelscheibe 1 liegenden Teil jeder Nase 9 flach gegen die Rückseite der Spiegelscheibe 1, so daß diese zwischen zwei parallelen Flächen, nämlich der ebenen Unterseite 6 des Wulstes 4 und dem hochgebogenen Abschnitt 9b der Nasen 9 eingeklemmt ist.

Aufgrund der federnd-elastischen Eigenschaften des Materials der Fassung 2 wird die Spiegelscheibe 1 nach der Montage im Gehäuse 3 dauerhaft festgeklemmt und dabei vibrationssicher gehalten, gleichgültig welche exakte Dicke und welche exakte Außenabmessungen sie im Einzelfall aufweist. Somit können die Toleranzanforderungen an die Dicke der Spiegelscheibe 1 und die Abmessungen von Fassung 2 und Gehäuse 13 gesenkt werden, ohne die Qualität des zusammengebauten Rückblickspiegels zu verschlechtern. Ein Vergleich der Fig. 3 und 4 zeigt, daß eine dünnere Spiegelscheibe 1 mit größeren Außenabmessungen (Fig. 3) ebenso wie eine dickere Spiegelscheibe (Fig. 4) sicher gehalten wird, weil in jedem Fall der umlaufende Rand der Spiegelscheibe zwischen einander gegenüberliegenden Abschnitten der Fassung 2 flächig erfaßt und festgeklemmt wird. Andererseits ist die Fassung 2 am Gehäuse 3 sicher befestigt, so daß jede Spiegelscheibe 1 vibrationssicher am Gehäuse 3 angebracht ist.

Zwischen den Stegen 7 und 8/einer an der Außenseite und des Wulstes 4 befindlichen zungenartigen Verlängerung 14 befindet sich eine Aufnahme/für den Rand 11 des Gehäuses 3. Dieser Rand 11 wird an seiner Innenseite von den Nasen 10 der Stege 8 hintergriffen, wenn die Fassung 2 mit der in sie eingesteckten Spiegelscheibe 1 von oben auf das Gehäuse 3 aufgesteckt und aufgedrückt ist, wie Fig. 5 zeigt. Die Verlängerung 14 gewährleistet den richtigen Sitz der Fassung 2 am Gehäuse 3. Wegen der einfachen Schnappverbindung zwischen der Fassung 2 und dem Rand 11 des Gehäuses 3 läßt sich die Fassung 2 zusammen mit der Spiegelscheibe 1 leicht montieren und wird in der richtigen Montagestellung aufgrund formschlüssiger Verbindung dauerhaft gehalten.

In Fig. 2 ist durch den Pfeil 16 angedeutet, daß die Spiegelscheibe 1 zunächst in die Fassung 2 hineingedrückt wird, damit die Nasen 9 sie hintergreifen, bevor die Montage am Gehäuse 3 erfolgt.

Aus Fig. 1 und 6 ist zu erkennen, daß zwischen benachbarten Stegen 7 und 8 querverlaufende Rillen 17 in die Unterseite 6 des Wulstes 4 der Fassung 2 eingefräst sind, die nach der Unterseite 6 offen sind und zur Entlüftung des Innenraumes des Gehäuses 3 während und nach der Montage der Fassung 2 dienen. Dadurch wird einerseits die Montage erleichtert und andererseits gewährleistet, daß das Gehäuse 3 stets ausreichend entlüftet ist und dementsprechend der Spiegelbelag der Spiegelscheibe 1 nicht durch daran kondensierende Feuchtigkeit beschädigt oder gar zerstört werden kann, ebensowenig wie das Gehäuse 3, wenn es aus korrisionsanfälligem Material wie Stahlblech besteht, rosten kann. Die Rillen 17 enden, wie Fig. 6 zeigt, hinter der Verlängerung 14 und sind somit nach außen abgedeckt. Dadurch wird ein Eindringen von Feuchtigkeit in das Gehäuse 3 behindert.

G/uh

G 52 404

Patentansprüche:

1. Rückblickspiegel für Kraftfahrzeuge, insbesondere Außenrückblickspiegel, bestehend aus einem schalenartigen Gehäuse (3) und einer Spiegelscheibe (1), die mittels einer auf den umlaufenden äußeren Rand (11) des Gehäuses aufgesteckten umlaufenden Fassung (2) gehalten ist, welche an in das Gehäuse ragenden Stegen (7) nach innen weisende federnde Nasen (9) zum Hintergreifen der sich gegen die Unterseite (6) der Fassung legenden Spiegelscheibe aufweist, d a d u r c h  g e k e n n z e i c h n e t, daß jeder dieser Stege (7) an die Nase (9) anschließend eine federnde Zunge (13) aufweist, die sich gegen die Innenseite des Gehäuses (3) legt und die Nase (9) gegen die Rückseite der Spiegelscheibe (1) drückt.

2. Rückblickspiegel nach Anspruch 1, dadurch gekennzeichnet, daß die Zunge (13) als Verlängerung des Steges (7) ausgebildet ist.

3. Rückblickspiegel nach Anspruch 1 oder 2, dadurch gekennzeichnet, daß die Fassung (2) zwischen benachbarten Stegen (7 und 8) querverlaufende Entlüftungsrillen (7) enthält.

G/uh

1/1

FIG.1

FIG.2

FIG.5

FIG.3

FIG.6

FIG.4

# 0047808
Nummer der Anmeldung

**Europäisches Patentamt**

## EUROPÄISCHER RECHERCHENBERICHT

EP 80 71 0022

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe. soweit erforderlich. der maßgeblichen Teile | betrifft Anspruch | |
| X | <u>DE - A - 2 037 245</u> (FECHENBACHER) <br><br> * Patentanspruch 1; Figur 1 * <br><br> -- | 1 | B 60 R 1/02 |
| | <u>DE - B - 2 113 782</u> (FECHENBACHER) <br><br> * Patentanspruch 1; Figur 1 * <br><br> -- | 1 | |
| | <u>FR - A - 2 025 738</u> (WINGARD) <br><br> * Patentansprüche 1,3 * <br> & DE - A - 1 959 639 (WINGARD) <br><br> -- | 1 | RECHERCHIERTE SACHGEBIETE (Int Cl ) |
| | <u>FR - A - 1 502 291</u> (LAFONT) <br><br> * Zusammenfassung * <br><br> -- | 1 | B 60 R 1/02 |
| | <u>FR - A - 1 340 885</u> (CIPA) <br><br> * Zusammenfassung * <br><br> -- | 1 | |
| | <u>DE - A - 2 312 289</u> (ENGELMANN) <br><br> * Patentanspruch 1 * <br><br> -- | 1 | KATEGORIE DER GENANNTEN DOKUMENTE |
| A | <u>US - A - 3 171 886</u> (HOLT) <br><br> * Patentanspruch 1 * <br><br> -- | 1 | X: von besonderer Bedeutung <br> A technologischer Hintergrund <br> O: nichtschriftliche Offenbarung <br> P. Zwischenliteratur <br> T der Erfindung zugrunde liegende Theorien oder Grundsatze <br> E kollidierende Anmeldung <br> D in der Anmeldung angeführtes Dokument <br> L aus andern Grunden angefuhrtes Dokument |
| A | <u>DE - U - 74 04 579</u> (FRESE) <br><br> * das ganze Dokument *    ./. | 1 | & Mitglied der gleichen Patent- familie übereinstimmendes Dokument |

Der vorliegende Recherchenbericht wurde für alle Patentansprüche erstellt

| Recherchenort | Abschlußdatum der Recherche | Prüfer |
|---|---|---|
| Den Haag | 27-05-1981 | SCHMITTER |

EPA form 1503.1   06.78

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - U - 69 01 458 (FRESE) <br><br> * das ganze Dokument * <br><br> --------- | 1 | |
| | | | **RECHERCHIERTE SACHGEBIETE (Int. Cl. 3)** |